# EUROPEAN PATENT APPLICATION

(11) **EP 1 953 972 A1**
(43) Date of publication of application: **06.08.2008**
(21) Application number: 06817849.0
(22) Date of filing: 20.11.2006
(51) Int. Cl.: H04L 12/56

(54) **METHOD AND DATE RELAY ENTITY FOR RELAYING THE DATE FRAME BY THE DATE RELAY ENTITY**

(30) Priority: 22.11.2005 CN 200510125251
(71) Applicant: Huawei Technologies Co., Ltd., Longgang District, Shenzhen, Guangdong 518129 (CN)
(72) Inventor: FAN, Lingyuan, Guangdong 518129 (CN); ZI, Kang, Gugangdong 518129 (CN)
(74) Representative: Hengelhaupt, Jürgen
(86) International application number: PCT/CN2006/003110
(87) International publication number: WO 2007/059699

(57) **Abstract**

A method for relaying the date frame by the date relay entity DRE, which apply for the Ethernet, include: set one or more interfaces of the DRE has the function of enable virtual switch V-Switch, configuring working mode of the one or more enable virtual switch functions to the sharing mode of V-Switch function and Ethernet function; and set the strategy of relaying the data frame by the V-Switch, the data frame is received with the sharing mode; when the DRE interface that is configured in the sharing mode received the data frame, if the flag information carried in the data frame is matched to the judge strategy, relaying the data frame uses the relaying process which corresponded to the V-Switch; if not, relaying the data frame uses the relaying process which corresponded to the Ethernet. Use the method, the DRE equipment has the V-Switch function and the Ethernet function, so could use two techniques to configure the network, solved the bearer problem of the multi-cast, single-cast and point-to-multipoint service.

## Description

### Field of the Invention

The present invention relates to the communication field, and in particular to a method for forwarding a received data frame via a Data Relay Entity (DRE) in an Ethernet.

### Background of the Invention

As the Internet grows in scale, various network services have emerged. For instance, wideband multimedia services, including video/audio streams, Video On Demand (VOD), video multicast, multimedia interaction, network gaming with a high bandwidth demand, etc., and provision for users of a video conference, tele-education, a Virtual Private Network (VPN), a special data line with a QoS guarantee, a hotel IP access service, etc., have become important aspects of wideband operation.

Since a multimedia service requires a huge amount of bandwidth, it is difficult to transmit reliably a critical service which shall be guaranteed in an existing network. Therefore, various Quality-of-Service (QoS) technologies have emerged as desired. There are already numerous service models and mechanisms in the prior art to satisfy a QoS demand.

Currently, various Virtual Private Network/Virtual Private Dial Network (VPN/VPDN) special line schemes have been proposed, such as Virtual-Switch, General Router Encapsulation (GRE), Layer-2 Tunneling Protocol (L2TP), Multi-Protocol Label Switching (MPLS), etc. Particularly, the Intelligent V-Switch (IVS) technology is primarily intended to build a stable, practical and economic operation-level metropolitan Ethernet, can implement functions of a QoS guarantee, network security protection, telecommunication-level network maintenance and administration, etc. The Intelligent V-Switch (IVS) technology is provided with core service management capabilities, such as number-based user administration, certain mobility, centralized management on service open administration billing, etc., and provide services including intelligent layer-2 traffic scheduling, a Local Area Network (LAN) special line, IP traffic planning, etc.

The architecture for the V-Switch is provided with perfect Ethernet VLAN switching and scheduling functions, flexible means for service scheduling, establishing and adjusting, abundant and extensible layer-2 service provision capabilities and perfect operation maintenance administration utilities and information.

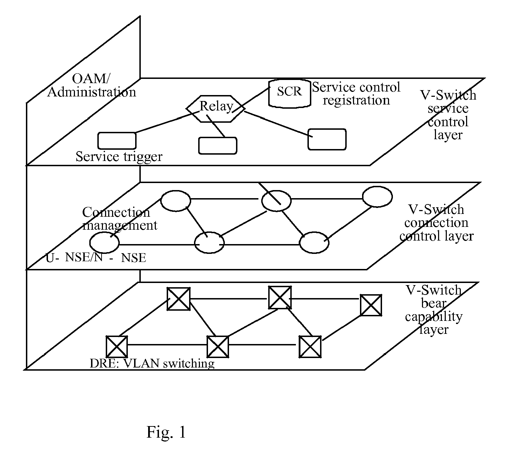

Logic layers and function models of the V-Switch architecture are as illustrated in figure 1.

In figure 1, the V-Switch architecture is divided into four layers: a V-Switch service control layer, a V-Switch connection control layer, a V-Switch bear capability layer and an Operation Administration Maintenance (OAM)/administration layer.

The V-Switch connection control layer maintains switch resources in a DRE, such as devices, ports, links, VLAN, etc., receives a V-Switch establishment request from the V-Switch service control layer SCR (a V-Switch service control entity), selects a service stream path and allocates a bandwidth and VLAN resource for the V-Switch connection, and issues control information to the DRE device through which a service stream passes.

The DRE is located at the V-Switch bear capability layer, and forwards a data stream in an Ethernet frame format dependent upon VLAN switch table items set by the V-Switch connection control layer.

Contents of the VLAN switch table items are as illustrated in the following Table 1.

**Table 1**

| | Parameters | Parameter descriptions |
|---|---|---|
| 1 | Port 1 | a Service stream forwarding port 1, e.g., GE 1/0/0 |
| 2 | VLAN ID 1 | a VLAN ID carried in Ethernet frame format over port 1 by a service stream |
| 3 | Port 2 | a Service stream forwarding port 2, e.g., GE 1/0/1 |
| 4 | VLAN ID 2 | a VLAN ID carried in Ethernet frame format over port 2 by a service stream |
| 5 | Bandwidth | bandwidth limitation of a service stream |
| 5.1 | Uplink maximum bandwidth | uplink (received from port 1 and transmitted through port 2) maximum bandwidth of a service stream |
| 5.2 | Downlink maximum bandwidth | downlink (received from port 2 and transmitted through port 1) maximum bandwidth of a service stream |
| 6 | QoS parameters | QoS parameter requirements of a service stream |
| 6.1 | Delay | |
| 6.2 | Delay dither | |
| 6.3 | Packet loss ratio | |

The DRE uses the VLAN switch table as the basis of routing of the data stream forwarding.

The V-Switch technology is based upon VLAN switching, and is suitable for bearing unicast or point-to-point services. The V-Switch technology may necessarily be complicated if it is used to bear multicast, broadcast or multipoint-to-multipoint services.

The Ethernet technology is highly acceptable in existing networks, and has become one of the major technologies for implementing integration of the three networks or building a metropolitan network in the future. Ethernet services will develop enormously in future markets.

Therefore, it is necessary to integrate a V-Switch function with an existing Ethernet function for a DRE device, so that different Ethernet services can be borne respectively by means of advantages of the two technologies. However, in the prior art, no method has been provided in which data frame forwarding can be accomplished via a DRE provided with both the V-Switch function and the existing Ethernet function.

### Summary of the Invention

The invention provides a data relay entity and a data frame forwarding method thereof, which addresses such a problem in the prior art that data frame forwarding can not be accomplished via a data relay entity with both the V-Switch function and the existing Ethernet function.

The invention provides one method for forwarding a data frame via the data relay entity, including:
configuring a Virtual Switch V-Switch enabled port of a Data Relay Entity DRE to operate in a shared mode or an exclusive mode;
upon reception of the data frame via the port in the exclusive mode, forwarding the data frame through a forwarding process corresponding to the V-Switch function;
upon reception of the data frame through the port in the shared mode, forwarding the data frame through the forwarding process corresponding to the V-Switch function when determining according to preset decision policies that the data frame is to be forwarded through the forwarding process corresponding to the V-Switch function; or forwarding the data frame through a forwarding process corresponding to an Ethernet function when determining according to the preset decision policies that the data frame is to be forwarded through the forwarding process corresponding to the Ethernet function.

The invention provides another method for forwarding a data frame via a data relay entity, including:
configuring a Virtual Switch (V-Switch) enabled port of a Data Relay Entity (DRE) to operate in a shared mode;
upon reception of the data frame via the port in the shared mode, forwarding the data frame through a forwarding process corresponding to the V-Switch function when determining according to preset decision policies that the data frame is to be forwarded through the forwarding process corresponding to the V-Switch function; or forwarding the data frame through a forwarding process corresponding to an Ethernet function when determining according to the preset decision policies that the data frame is to be forwarded through the forwarding process corresponding to the Ethernet function.

One data relay entity according to the invention comprises a plurality of V-Switch enabled ports, wherein some of the V-Switch enabled ports are configured to operate in a shared mode, and others of the V-Switch enabled ports are configured to operate in an exclusive mode; and wherein,
upon reception of a data frame via the ports in the exclusive mode, the data frame is forwarded through a forwarding process corresponding to a V-Switch function; and
upon reception of a data frame via the ports in the shared mode, the data frame is forwarded through the forwarding process corresponding to the V-Switch function when determining according to preset decision policies that the data frame is to be forwarded through the forwarding process corresponding to the V-Switch function; or the data frame is forwarded through a forwarding process corresponding to an Ethernet function when determining according to the preset decision policies that the data frame is to be forwarded through the forwarding process corresponding to the Ethernet function.

Another data relay entity according to the invention comprises a plurality of V-Switch enabled ports, wherein the V-Switch enabled ports are configured to operate in a shared mode, and
upon reception of a data frame via the V-Switch enabled ports, the data frame is forwarded through a forwarding process corresponding to a V-Switch function when determining according to preset decision policies that the data frame is to be forwarded through the forwarding process corresponding to the V-Switch function; or the data frame is forwarded through a forwarding process corresponding to an Ethernet function when determining according to the preset decision policies that the data frame is to be forwarded through the forwarding process corresponding to the Ethernet function.

The invention attains the following advantageous effects.

With the invention, the DRE device is configured to be provided with both the V-Switch function and the Ethernet function by configuring a port of the DRE device to operate in the shared mode, so that the two technologies can be used in hybrid networking, and different services can be borne respectively dependent upon different technical advantages of the two technologies. In this way, the problem of bearing multicast, broadcast or point-to-multipoint services in practical networking can be solved on the premise of maintaining simplicity of the V-Switch technology.

### Brief Descriptions of the Drawings

Figure is a schematic diagram of a V-Switch architecture model structure;

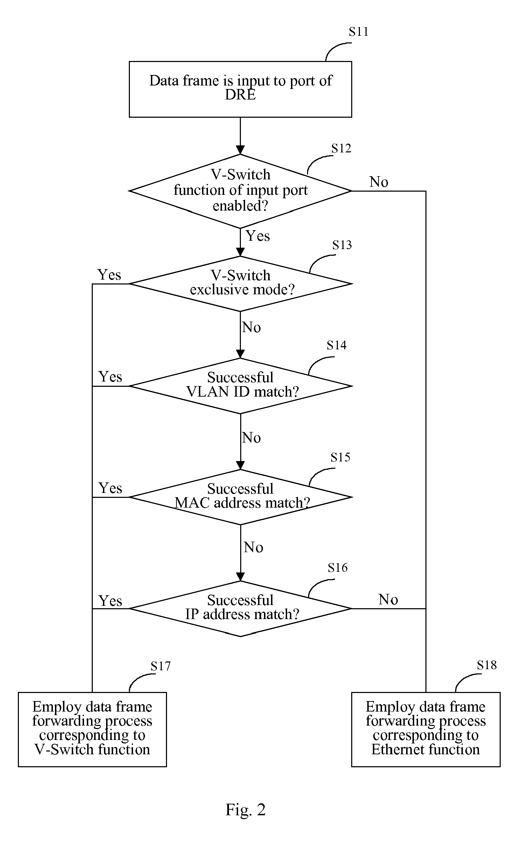

Figure 2 is a flow chart according to an embodiment of the invention.

### Detailed Descriptions of the Embodiments

The V-Switch technology is highly suitable for bearing unicast or point-to-point services, but it is difficult for the technology to bear multicast, broadcast or multipoint-to-multipoint services. However, the existing Ethernet technology is advanced in respect of bearing the multicast, broadcast or multipoint-to-multipoint services based upon learning and forwarding MAC addresses.

Therefore, embodiments of the invention provide a method in which both the V-Switch function and the existing Ethernet function are enabled for a DRE device, so that the two technologies can be used in hybrid networking, and different services can be borne respectively dependent upon different technical advantages of the two technologies. In this way, the problem of bearing the multicast, broadcast or point-to-multipoint services in practical networking can be solved on the premise of maintaining simplicity of the V-Switch technology.

For this reason, embodiments of the invention provide a DRE with a V-Switch enabled port which can operate in two modes, i.e., a shared mode and an exclusive mode, and provide decision policies used to forward a received data frame in the shared mode by using the V-Switch function. When flag information carried in the received data frame matches the preset decision policies, the received data frame is forwarded through a forwarding process corresponding to the V-Switch function; otherwise the received data frame is forwarded through a forwarding process corresponding to the Ethernet function.

Definitions of the two operation modes and their specific forwarding processes will be described in details below.

A V-Switch enabled port of the DRE supports the following two operation modes.

1) Exclusive Mode

Namely, a V-Switch enabled port of the DRE is occupied exclusively by the V-Switch function, and only supports the V-Switch switching function.

2) Shared Mode

Namely, a V-Switch enabled port of the DRE is shared by both the V-Switch function and the existing Ethernet function, and supports both the switching function of V-Switch and the switching function of Ethernet. One of the functions to be used for processing is determined dependent upon the preset function decision policies and information extracted from the data frame.

A specific operation mode configuration can be performed in the following methods.

(1) Configuration based upon the DRE device

A uniform configuration is performed for the entire DRE device, and applies to all V-Switch enabled ports of the DRE. For instance, all the V-Switch enabled ports of the DRE are configured uniformly to operate in the exclusive mode or shared mode.

(2) Respective configurations based upon ports

A configuration is performed separately on each V-Switch enabled port. Therefore, both of the two modes can be selected for the DRE device according to practical needs, namely, some ports operate in the exclusive mode, and others operate in the shared mode. As compared to the first method, this method is flexible, however, a heavy workload for setting the ports is involved.

(3) Hybrid configuration

The above methods are in hybrid use. Namely, a default configuration for each V-Switch enabled port is employed as a uniform configuration for the DRE device and a port configuration is performed separately for a port whose operation mode is required to be changed. This method incorporates the advantages of the above two configuration methods, and ensures a flexible operation mode configuration for a port while keeping the configuration workload as low as possible.

Regardless of which configuration method in use, a specific operation mode will be determined definitely for use by each V-Switch enabled port of the DRE. Namely, each V-Switch enabled port of the DRE operates in either the exclusive mode or the shared mode.

When a V-Switch enabled port of the DRE operates in the shared mode, V-Switch decision policies need to be further provided. According to the policies in conjunction with flag information carried in a data frame currently being processed, such as an Virtual Local Area Network Identifier (VLAN ID), a Media Access Control address identifier (MAC address), or an IP address, the DRE determines whether the data frame will be forwarded through a forwarding process corresponding to the V-Switch function or through a forwarding process corresponding to the Ethernet function.

Specific policies are given below as examples.

A first policy
A set of VLAN IDs for a match is configured to forward a data frame through the V-Switch function for each V-Switch enabled port of the DRE.

The VLAN IDs can be selected arbitrarily among valid VLAN IDs 0~4095. For instance, a set of VLAN IDs for the match, {1, 8, 100-1024} is configured to perform switching through the V-Switch function for a V-Switch enabled port A of the DRE, wherein 100-1204 indicates a continuous range from 100 to 1024.

A second policy
A set of MAC addresses for a match is configured to forward a data frame through the V-Switch function for each V-Switch enabled port of the DRE.

The match can be performed based upon the set of {destination MAC addresses}, or the set of source MAC addresses, destination MAC addresses}, or both. In the case that both sets exist, the match is performed preferentially based upon the set of {source MAC addresses, destination MAC addresses} according to a longest match principle.

A third policy
A set of IP addresses for a match is configured to forward a data frame through the V-Switch function for each V-Switch enabled port of the DRE.

The match can be performed based upon the set of {destination IP addresses} or the set of {source IP addresses, destination IP addresses}.

In the case that both sets exist, the match is performed preferentially based upon the set of {source IP addresses, destination IP addresses} according to the longest match principle.

The above polices are merely for the purpose of illustration, and a practical application can also be based upon more various decision policies.

The above decision policies for the match can be configured statically on the DRE or at a network administrator, and can also be sent dynamically through signaling from a control plane, such as a Virtual Switch Controller (VSC), of a system where the DRE is located. A decision policy type corresponding to each port can be added or removed dynamically by the DRE or the network administrator.

A port can concurrently use one or more decision policies. Decision policies used by all the V-Switch enabled ports of the DRE can be the same or different dependent upon a practical application demand.

In the case that two or more decision policies exist, a priority sequence of matching the decision policies in a data frame forwarding process can be configured. For instance, two decision policies, i.e., the above first and second decision policies, are configured for an V-Switch enabled port B, and a match sequence of the decision policies can be set in such a way that a match is performed firstly with respect to a set of VLAN IDs, and then with respect to a set of MAC addresses, or vice versa. A specific priority sequence of matching can be configured on the DRE or at the network administrator.

Without loss of generality, supposing that N decision policies are configured for a V-Switch enabled port, and theoretically, an arrangement combination of these N decision policies can determine a corresponding matching sequence. In a practical network, required decision policies and the most appropriate matching sequence of the decision policies are determined dependent upon different positions in the network where respective DREs are located (e.g., at an edge of the network or in the middle of the network). For instance, when a DRE is located in the middle of the network, only VLAN switching is typically required in a V-Switch function process without requiring complicated processing on MAC addresses or IP addresses. Thus, only a set of VLAN IDs may be set in the decision policy; and when the DRE is located at the edge of the network, multiple policies are required, and provision of the matching sequence of the multiple decision polices is necessary. For instance, a match with respect to the set of VLAN IDs is set at the first place.

Specific steps of a data frame forwarding method used upon reception of a data frame via a port of a DRE according to an embodiment of the invention will be described in details below in conjunction with a flow as illustrated in figure 2.

In step S11, a data frame to be forwarded is received via a port of a DRE;

In step S12, it is determined whether the input port of the data frame is V-Switch enabled, and if the current input port of the data frame is not V-Switch enabled, then the flow goes to step S18; otherwise the flow goes to the following steps.

In step S13, it is determined whether the port operates in a V-Switch function exclusive mode; and if the port operates in the exclusive mode, then the flow goes to step S 17; otherwise the flow goes to the following steps.

In step S14, matching processes of the preset policy sets are performed according to the set matching sequence based on the flag information carried in the data frame. In this embodiment, it is assumed that the above three types of decision policy sets are configured for this port, and the matching sequences are the first policy, the second policy and the third policy, respectively. Then, the match is performed preferentially with respect to the set of VLAN IDs.

Specifically, a VLAN ID carried in the data frame is acquired. If no VLAN ID is in the data frame, the flow goes to step S 15.

If the data frame carries the VLAN ID, it is further determined whether the carried VLAN ID is included in the set of VLAN IDs for the match. If the VLAN ID is not included in the set of VLAN IDs, the flow goes to the step S15; and if the VLAN ID carried in the data frame is included in the set of VLAN IDs, the flow goes to the step S17.

In the step S 15, a MAC address ID carried in the data frame is acquired. If no MAC address ID is in the data frame, the flow goes to a step S16.

If the data frame carries a MAC address ID, it is further determined whether the carried MAC address ID is included in the set of MAC addresses for the match. If the MAC address ID is not included in the set of MAC addresses, the flow goes to the step S16; and if the MAC address ID carried in the data frame is included in the set of MAC addresses, the flow goes to the step S 17.

The set of MAC addresses can include the set of {destination MAC addresses} or the set of source MAC addresses, destination MAC addresses}, or both. In the case that both sets exist, the match is performed preferentially based upon the set of {source MAC addresses, destination MAC addresses} in the longest matching principle.

In the step S 16, an IP address ID carried in the data frame is acquired. If no IP address ID is in the data frame, the flow goes to the step S 18.

If the data frame carries the IP address ID, it is further determined whether the carried IP address ID is included in a set of IP addresses for the match. If the IP address ID is not included in the set of IP addresses, the flow goes to the step S 18, and if the IP address ID carried in the data frame is included in the set of IP addresses, the flow goes to the step S 17.

The set of IP addresses can include the set of {destination IP addresses} or the set of source IP addresses, destination IP addresses}, or both. In the case that both sets exist, the match is performed preferentially based upon the set of {source IP addresses, destination IP addresses} in the longest matching principle.

In other words, the flow goes to the step S 17 if a source IP address and a destination IP address in the data frame can match with a piece of record information in the set of {source IP addresses, destination IP addresses} or if a destination IP address in the data frame can match with a piece of record information in the set of {destination IP addresses}.

In the step S17, the DRE forwards the received data frame using the forwarding process corresponding to the V-Switch function. The specific forwarding process is known in the art, and will not be described further.

In the step S18, the DRE forwards the received data frame by using the forwarding process corresponding to the Ethernet function. The specific forwarding process is known in the art, and will not be described further.

The above embodiment has been described by way of an example in which the port currently receiving the data frame operates in the shared mode, and the configured decision policies and the matching sequence are the set of VLAN IDs, the set of MAC addresses and the set of IP addresses.

As mentioned above, specific data forwarding processes may vary due to different decision policies and matching sequences configured for different ports.

The invention has no limitation on specific decision policy types and specific data frame forwarding processes.

The steps S13, S14 and S15 in the above flow can be omitted as needed in a practical application. For instance, when the DRE is located in the middle of the network, only VLAN switching is typically required in the V-Switch function process without requiring complicated processing on the MAC addresses or IP addresses. In this case, the steps S14 and S15 can be omitted, thereby simplifying the data forwarding process. Further, the matching policies for the V-Switch data forwarding as adopted in the invention will not be limited to the exemplified three types, and new types of matching policies other than these can also be added. Thus, the process also includes determination steps S13', S14', S15', etc.

In a practical application, some of the V-Switch enabled ports of the DRE can be set to operate in the exclusive mode, and the others can be set to operate in the shared mode. Alternatively, all the V-Switch enabled ports of the DRE can be set to operate in the shared mode.

To this end, the embodiments of the invention provide two types of DREs particularly as follows.

A first type of DRE includes several V-Switch enabled ports, wherein some of the ports operate in the shared mode, and the others operate in the shared mode.

More specifically, upon reception of a data frame via the ports in the exclusive mode, the data frame is forwarded through the forwarding process corresponding to the V-Switch function.

Upon reception of a data frame via the ports in the shared mode, the data frame is forwarded through the forwarding process corresponding to the V-Switch function when determining from the preset decision policies that the data frame is to be forwarded through the forwarding process corresponding to the V-Switch function, and the data frame is forwarded through the forwarding process corresponding to the Ethernet function when determining from the preset decision policies that the data frame is to be forwarded through the forwarding process corresponding to the Ethernet function.

A second type of DER includes several V-Switch enabled ports, wherein all the ports operate in the shared mode.

Upon reception of a data frame via the V-Switch enabled ports, the data frame is forwarded through the forwarding process corresponding to the V-Switch function when determining from the preset decision policies that the data frame is to be forwarded through the forwarding process corresponding to the V-Switch function, and the data frame is forwarded through the forwarding process corresponding to the Ethernet function when determining from the preset decision policies that the data frame is to be forwarded through the forwarding process corresponding to the Ethernet function.

To sum up, the embodiments of the invention configure the DRE device to be provided with both the V-Switch function and the existing Ethernet function by setting a port of the DRE device to operate in the shared mode, so that the two technologies can be used in hybrid networking, and different services can be borne respectively according to different technical advantages of the two technologies. In this way, the problem of bearing multicast, broadcast or multipoint-to-multipoint services in practical networking can be solved on the premise of maintaining the simplicity of the V-Switch technology.

It is evident that those skilled in the art can make various modifications and variations to the invention without departing from the spirit and scope of the invention. Accordingly, the invention is intended to encompass these modifications and variations provided that they fall into the scope as defined by the claims of the invention and their equivalents.

## Claims

1. A method for forwarding a data frame via a data relay entity, comprising:
configuring a Virtual Switch V-Switch enabled port of a Data Relay Entity DRE to operate in a shared mode or an exclusive mode;
upon reception of the data frame via the port in the exclusive mode, forwarding the data frame through a forwarding process corresponding to the V-Switch function;
upon reception of the data frame through the port in the shared mode, forwarding the data frame through the forwarding process corresponding to the V-Switch function when determining according to preset decision policies that the data frame is to be forwarded through the forwarding process corresponding to the V-Switch function; or forwarding the data frame through a forwarding process corresponding to an Ethernet function when determining according to the preset decision policies that the data frame is to be forwarded through the forwarding process corresponding to the Ethernet function.

2. The method according to claim 1, wherein upon reception of the data frame via the V-Switch enabled port of the DRE, the method comprises:
determining an operation mode of the port;
when the port is a port in the shared mode, determining whether flag information carried in the data frame matches with the decision policies; and if the flag information carried in the data frame matches with the decision policies forwarding the data frame through the forwarding process corresponding to the V-Switch function, and if the flag information carried in the data frame does not match with the decision policies, forwarding the data frame through the forwarding process corresponding to the Ethernet function.

3. The method according to claim 1 or 2, wherein the decision policies are configured statically on the DRE or in a network administrator, or are issued dynamically from a control plane of a system to which the DRE belongs.

4. The method according to claim 1 or 2, wherein the decision policies comprise one or more types of decision polices, and the method further comprises
determining a corresponding matching sequence according to different arrangement combinations of the types of the decision policies; and
matching sequentially with the types of decision policies according to the determined matching sequence upon reception of the data frame through the port in the shared mode.

5. The method according to claim 4, wherein the decision policies configured for a plurality of ports in the shared mode are the same or different.

6. The method according to claim 5, wherein the decision policies corresponding to each of the ports in the shared mode is added or removed dynamically by the DRE or the network administrator.

7. The method according to claim 2, wherein the decision policies comprise any one selected from the group consisting of a set of Virtual Local Area Network identifiers VLAN IDs, a set of Media Access Control MAC addresses, a set of IP addresses, and any combination of the sets; and wherein
when the port receiving the data frame is in the shared mode, if any one of the following conditions is met, a successful match is determined and the data frame is forwarded through the V-Switch function:
a VLAN ID carried in the data frame is included in the set of VLAN IDs, or
a MAC address carried in the data frame is included in the set of MAC addresses, or
an IP address carried in the data frame is included in the set of IP addresses.

8. The method according to claim 7, wherein VLAN ID(s) included in the set of VLAN IDs comprises any one of or any number of valid VLAN IDs.

9. The method according to claim 7, comprising:
matching a set of MAC addresses preferentially in a longest matching principle, wherein the set of MAC addresses comprises:
a set of destination MAC addresses {destination MAC} and/or a set of source MAC addresses and destination MAC addresses {source MAC, destination MAC}.

10. The method according to claim 7, comprising:
matching a set of IP addresses preferentially in a longest matching principle, wherein the set of IP addresses comprises:
a set of destination IP addresses {destination IP} and/or a set of source IP addresses and destination IP addresses source IP, destination IP}.

11. The method according to claim 1, wherein all V-Switch enabled ports of the DRE are configured uniformly to operate in the shared mode or the exclusive mode; or
all V-Switch enabled ports of the DRE are configured respectively to operate in the shared mode or the exclusive mode.

12. The method according to claim 11, wherein after the uniform configuration, if the operation mode of one or more ports is required to be modified, the operation mode of each of the ports is separately modified.

13. The method according to claim 1, wherein the data frame is forwarded through the forwarding process corresponding to the Ethernet function if a current port via which the data frame is received is not a V-Switch enabled port.

14. A method for forwarding a data frame via a data relay entity, comprising:
configuring a Virtual Switch (V-Switch) enabled port of a Data Relay Entity (DRE) to operate in a shared mode;
upon reception of the data frame via the port in the shared mode, forwarding the data frame through a forwarding process corresponding to the V-Switch function when determining according to preset decision policies that the data frame is to be forwarded through the forwarding process corresponding to the V-Switch function; or forwarding the data frame through a forwarding process corresponding to an Ethernet function when determining according to the preset decision policies that the data frame is to be forwarded through the forwarding process corresponding to the Ethernet function.

15. The method according to claim 14, wherein the decision polices comprise any one selected from the group consisting of a set of Virtual Local Area Network identifiers VLAN IDs, a set of Media Access Control MAC addresses and a set of IP addresses, and any combination of the sets;
the data frame is forwarded via the V-Switch function if any one of the following condition is met;
a VLAN ID carried in the data frame is included in the set of VLAN IDs;
a MAC address carried in the data frame is included in the set of MAC addresses; or
an IP address carried in the data frame is included in the set of IP addresses.

16. The method according to claim 14, wherein VLAN ID(s) included in the set of VLAN IDs comprises any one of or any number of valid VLAN IDs.

17. The method according to claim 14, comprising:
matching a set of MAC addresses preferentially in a longest matching principle,
wherein the set of MAC addresses comprises a set of destination MAC addresses {destination MAC} and/or a set of source MAC addresses and destination MAC addresses {source MAC, destination MAC}.

18. The method according to claim 14, comprising:
matching a set of IP addresses preferentially in a longest matching principle, wherein the set of IP addresses comprises a set of destination IP address {destination IP} and/or a set of source IP addresses and destination IP addresses {source IP, destination IP}.

19. A data relay entity, comprising a plurality of V-Switch enabled ports, wherein some of the V-Switch enabled ports are configured to operate in a shared mode, and others of the V-Switch enabled ports are configured to operate in an exclusive mode, and wherein
upon reception of a data frame via the ports in the exclusive mode, the data frame is forwarded through a forwarding process corresponding to a V-Switch function;
upon reception of a data frame via the ports in the shared mode, the data frame is forwarded through the forwarding process corresponding to the V-Switch function when determining according to preset decision policies that the data frame is to be forwarded through the forwarding process corresponding to the V-Switch function; or the data frame is forwarded through a forwarding process corresponding to an Ethernet function when determining according to the preset decision policies that the data frame is to be forwarded through the forwarding process corresponding to the Ethernet function.

20. A data relay entity, comprising a plurality of V-Switch enabled ports, wherein the V-Switch enabled ports are configured to operate in a shared mode; and
upon reception of a data frame via the V-Switch enabled ports, the data frame is forwarded through a forwarding process corresponding to a V-Switch function when determining according to preset decision policies that the data frame is to be forwarded through the forwarding process corresponding to the V-Switch function; or the data frame is forwarded through a forwarding process corresponding to an Ethernet function when determining according to the preset decision policies that the data frame is to be forwarded through the forwarding process corresponding to the Ethernet function.
